# EUROPÄISCHE PATENTSCHRIFT

(11) **EP 2 181 665 B1**
(45) Veröffentlichungstag und Bekanntmachung des Hinweises auf die Patenterteilung: **23.04.2014**
(21) Anmeldenummer: 10151569.0
(22) Anmeldetag: 05.11.2007
(51) Int. Cl.: A61C 13/00, A61C 13/12

(54) **Verfahren zum Herstellen eines Zahnersatzteils**
Method of producing a dental restoration
Méthode pour produire une restauration dentaire

(30) Priorität: 07.11.2006 DE 102006052420
(43) Veröffentlichungstag der Anmeldung: 05.05.2010
(62) Teilanmeldung aus: 07021489.5
(73) Patentinhaber: Institut Straumann AG, 4002 Basel (CH)
(72) Erfinder: Holzner, Stephan, 80269, Hohenschäftlarn (DE); Weber, Gerhard, 86932, Pürgen (DE)
(74) Vertreter: Grünecker, Kinkeldey, Stockmair & Schwanhäusser

(56) Entgegenhaltungen:
- US-A1- 2001 034 010
- US-A1- 2003 123 943
- US-A1- 2004 032 594
- US-A1- 2006 093 204
- US-A1- 2006 115 784
- US-B1- 6 640 150
- US-B1- 6 766 217

## Beschreibung

Die Erfindung betrifft ein Verfahren zum Erstellen eines digitalen Modells eines Zahnersatzteils sowie einem dazugehörigen Datenträger und ein Verfahren zum Herstellen eines Zahnersatzteils.

Das Modellieren von Zahnersatzteilen, wie etwa eines Abutments, ist bekannt z.B. US6640150. Ein Abutment ist ein Teil einer zahnärztlichen Versorgung, das auf ein Implantat z.B. aufgeschraubt wird. Auf das Abutment kann eine Krone oder eine Brücke oder anderes aufgesetzt werden.

In der Regel werden Standard-Abutments verwendet, die einem entsprechendem Implantat angepasst bzw. zugeordnet sind.

Aufgabe der vorliegenden Erfindung ist es, Mittel und Verfahren anzugeben, mit denen eine automatisierte Herstellung von individuellen Abutments oder anderen Zahnersatzteilen ermöglicht wird. Diese Aufgabe wird gelöst mit einem Verfahren zum Erstellen eines digitalen Modells eines Zahnersatzteils nach Anspruch 1, einem Verfahren zum Herstellen eines Zahnersatzteils nach Anspruch 4 und einem computerlesbaren Medium nach Anspruch 5. Bevorzugte Ausführungsformen sind in den Unteransprüchen offenbart.

Die Vorrichtung zum Halten eines Modells eines Zahnersatzteils, wie etwa eines Abutments, hat zwei Bereiche. Auf dem ersten Bereich wird das Modell eines Zahnersatzteils aufmodelliert oder ein entsprechendes Modell aufgesetzt werden. Der zweite Bereich erlaubt eine eindeutige Lageidentifizierung der Vorrichtung zum Halten. Der zweite Bereich wird vorzugsweise von dem Modell des Zahnersatzteils nicht abgedeckt, sodass dieser zweite Bereich optisch zugängig bleibt.

Ein solches Modell eines Zahnersatzteils kann beispielsweise aus Wachs modelliert werden, wodurch sich eine leichte, schnelle und individuelle sowie auch wohl bekannte Modellierungsart einsetzen lässt.

Die Vorrichtung zum Halten ist vorzugsweise so dimensioniert, dass sie nur ein Modell eines Zahnersatzteils aufweisen kann, dass einem einzelnen Zahn zugeordnet werden kann, wie etwa ein Abutment, das zu genau einem Implantat (an Stelle eines Zahns) gehört.

Mit dem zweiten Bereich kann die Lage der Vorrichtung zum Halten erkannt werden. Ist die Lage der Vorrichtung zum Halten bekannt, ist damit auch die Lage des ersten Bereichs bekannt. Da das Modell auf dem ersten Bereich aufmodelliert oder aufgesetzt ist, kann durch die Ermittlung der Außenform des Modells und durch die Ermittlung der Lage der Vorrichtung zum Halten und damit der des ersten Bereichs auch die Innenform des Zahnersatzteils definiert werden.

Der erste Bereich bereits der gewünschten Innenform eines Zahnersatzteils entspricht oder in dem ersten Bereich eine Aufnahme für ein Modellstück ausgebildet ist, wobei dieses Modellstück der Innenform des Zahnersatzteils entsprechen soll. Auf diese Weise ist es bei dem Modellieren des Zahnersatzteils möglich, die später im realen Zahnersatzteil vorkommende Innenform zu berücksichtigen.

Der zweite Bereich umfasst vorzugsweise zumindest eine, zwei, drei oder mehr ebene Flächen. Derartige ebene Flächen lassen sich vorteilhaft für die Lageidentifizierung der Vorrichtung zum Halten ausnutzen.

Weiterhin kann der zweite Bereich eine, zwei, drei oder mehr Formmarkierungen aufweisen. Formmarkierungen sind solche, die durch die Form gegeben werden. Mögliche Varianten einer Formmarkierung umfassen Nut, Rille, Vertiefung, Erhöhung, Kugel, Halbkugel, eine Kegel- oder eine Pyramidenform, wobei die Formmarkierung jeweils als Positiv- oder Negativform, d. h. als Erhebung als auch als Vertiefung ausgebildet sein kann. Auch mehrere dieser verschiedenen möglichen Formmarkierungen, der gleichen oder verschiedener Art, zusammen sind möglich.

Mit derartigen Formmarkierungen, die leicht beispielsweise mit einem optischen oder mechanischen Scanner erkannt werden können, lässt sich sehr präzise die Lage der Vorrichtung zum Halten identifizieren.

Der zweite Bereich umfasst vorzugsweise weiterhin einen Verbindungsteil, der mit dem ersten Bereich verbunden ist. Auch ein solcher Verbindungsteil kann mit einem Scanner in der Regel gut erfasst werden und erlaubt somit Informationsgewinnung für eine Lageidentifizierung der Vorrichtung zum Halten. Dadurch, dass der Verbindungsteil mit dem ersten Teil verbunden ist, ist er auch recht nahe des Modells des Zahnersatzteils, sodass er unter Umständen mit ein- und demselben Scanvorgang, mit dem das Zahnersatzteilmodell abgescannt wird, mit abgescannt werden kann.

Der Verbindungsteil hat ebenfalls eine vorzugsweise einfache geometrische Form, wie stabförmig oder scheibenförmig, da dies die Lageidentifizierung in bevorzugter Weise ermöglicht. Besonders vorteilhaft ist hierbei, wenn der Verbindungsteil von einer ebenen Fläche absteht. Dies erleichtert die Identifizierung des Verbindungsteils als solches für die Auswertung von Scandaten bei der Lageidentifizierung.

Die Vorrichtung zum Halten hat weiterhin vorzugsweise ein Halteteil mit dem die Vorrichtung in einem Halter gehalten werden kann. Dieser Halteteil ist beispielsweise stabförmig, sodass er in eine entsprechende Hülse eines Halters leicht eingeführt werden kann. (Der Begriff "Halter" wird für diejenige Einrichtung verwendet, die zum Halten der "Vorrichtung zum Halten" vorgesehen ist.)

Der Halteteil ist vorzugsweise so ausgebildet, dass eine Halterung der Vorrichtung zum Halten in einer eindeutigen Lage möglich ist. Bei einem zylinderförmigen, stabförmigen Halteteil kann dies beispielsweise durch eine Abflachung des Zylinders an einer oder mehreren Seiten erreicht werden.

Eine Vorrichtung zum Scannen von Objekten ist mit einem Halter ausgerüstet, in dem eine oben erwähnte Vorrichtung mit einer eindeutigen Lageorientierung gehalten werden und abgescannt werden kann. Mit einem solchen Scanner können beispielsweise Kiefermodelle und/oder Zahnmodelle und/oder Sägezahnmodellabschnitte oder andere Objekte für eine Dentalversorgung abgescannt werden. Mit ein- und demselben Scanner kann auch ein Modell eines Zahnersatzteils, wie das für ein Abutment, abgescannt werden. Die Vorrichtung weist hierzu einen Halter auf, der eine (zumindest im groben) eindeutige Lageorientierung erlaubt.

Bei einem Verfahren zum Erstellen eines digitalen Modells eines Zahnersatzteils, wie etwa eines Abutments, kann zunächst ein Zahnersatzteil an der Vorrichtung zum Halten modelliert oder aufgesetzt werden. Ein solches Zahnersatzteilmodell kann dann zusammen mit der Vorrichtung zum Halten abgescannt werden. Hierzu können Zahnersatzteilmodelle und die Vorrichtung zum Halten mit einem oder mehreren Scanvorgängen gleichzeitig und/oder nacheinander erfasst werden. Die Daten von mehreren Scanvorgängen können mit einem Matchingverfahren zu umfassenderen Datensätzen zusammengesetzt werden. Die Scandaten können dann ausgewertet werden, um zum Einen einen Teil der Form des Zahnersatzteilsmodells und zum Anderen die Lage der Vorrichtung zum Halten zu erfassen.

Die Modellierung des Zahnersatzteils und/oder das Abscannen können an anderen Orten als das Auswerten der Scanndaten erfolgen. Letzteres kann beispielsweise in einem Fertigungszenzrum geschehen, wohingegen das Modellieren und/oder das Abscannen bei einem Dentaltechniker und/oder bei einem Zahnarzt erfolgen kann. Diese Schritte können aber auch alle an einem Ort durchgeführt werden.

Bei dem Verfahren kann vorzugsweise eine Vorrichtung zum Halten, wie sie oben beschrieben worden ist, eingesetzt werden. Auch kann ein solches Verfahren vorzugsweise mit der oben beschriebenen Vorrichtung zum Scannen von Objekten durchgeführt werden.

Mit einem solchen Verfahren ist es dann beispielsweise möglich, die Innenform des Zahnersatzteils durch die erkannte Lage der Vorrichtung zum Hatten festzulegen.

Bei einem Verfahren zum Herstellen eines Zahnersatzteils wird zunächst ein digitales Modell, wie oben beschrieben, erstellt und anschließend das Zahnersatzteil unter Zuhilfenahme des digitalen Modells hergestellt. Hierfür sind bekannte CAM-Verfahren, wie Fräsen, 3D-Lithografie oder Ähnliches möglich.

Ein so hergestelltes Zahnersatzteil kann aus Keramik, Metall, Gold, Metalllegierung, keramischen Legierungen, Kunststoffen oder Ähnlichem bestehen.

Bevorzugte Ausführungsformen der Erfindung sollen anhand der beigefügten Figuren erläutert werden. Dabei zeigt:
- Figur 1: eine Vorrichtung zum Halten eines Modells gemäß einem ersten Ausfüh- rungsbeispiel der Erfindung;
- Figur 2: eine Vorrichtung zum Halten eines Modells gemäß einer zweiten Ausfüh- rungsform;
- Figur 3: die Vorrichtung aus Figur 2 mit einem Modell;
- Figur 4: Varianten einer Formmarkierung;
- Figur 5: schematische Darstellung der Daten zur Erstellung eines digitalen Modells eines Zahnersatzteils.

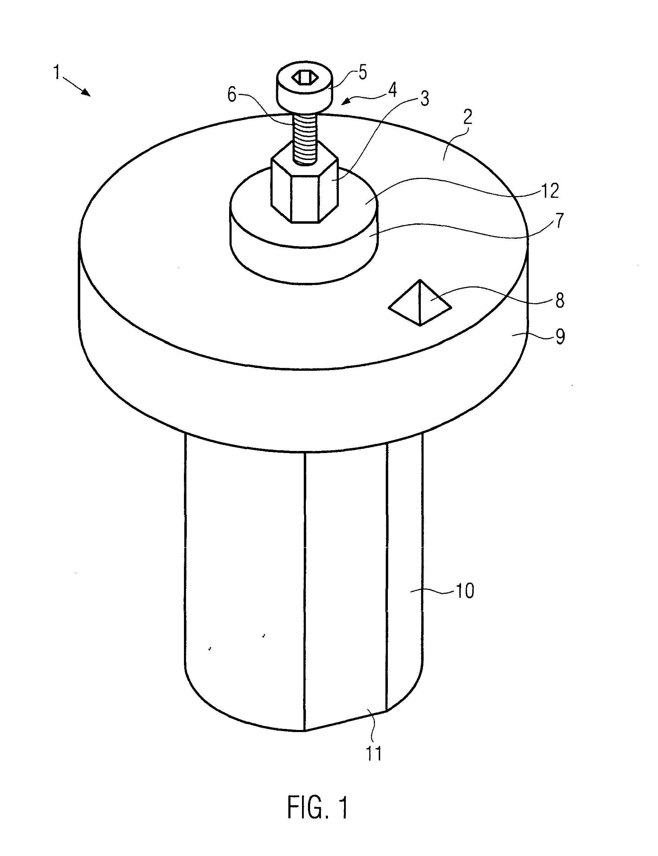

In Figur 1 ist eine Vorrichtung 1 zum Halten eines Modells eines Zahnersatzteils gezeigt. Die Vorrichtung 1 umfasst ein scheibenförmiges Element 9 mit einer ebenen Oberfläche 2. Von dieser ebenen Oberfläche 2 erhebt sich ein Verbindungsteil 7, das hier scheibenförmig mit einem kreisförmigen Querschnitt ausgebildet ist. Sowohl für die Scheibe 9 als auch unabhängig davon für die Schreibe 7 sind andere Querschnittsformen als kreisrund möglich, wie etwa quadratisch, rechteckig, dreieckig, sechseckig, polygonal oder elliptisch oder Anderes.

Auf der ebenen Oberfläche 2 ist eine Formmarkierung in Form einer Viereckspyramide 8 dargestellt. Diese Formmarkierung 8 erlaubt eine eindeutige Lageidentifizierung des zweiten Bereichs. Der zweite Bereich umfasst hier die Scheibe 9 und die Scheibe 7 sowie die Formmarkierung 8. Auf der Scheibe 7 ist eine mögliche Innenform eines Abutments angeordnet. Dies umfasst ein stabförmiges Element 3 mit einem hexagonalen Querschnitt. Hier sind auch andere Querschnittsformen möglich, wie etwa quadratisch, rechteckig, kreisrund, dreieckig, fünfeckig, achteckig oder sonst wie polygonal oder elliptisch. Das stabförmige Element 3 kann fest auf der Scheibe 7 angeordnet sein und z. B. einstückig mit diesem ausgebildet worden sein. Es kann jedoch auch in eine entsprechende Aufnahme in der Scheibe 7 eingesetzt worden sein.

In dem Beispiel, wie es in Figur 1 gezeigt ist, weist das stabförmige Element 3 eine Gewindebohrung auf, in die eine Schraube 4 eingeschraubt werden kann. Die Schraube 4 hat ein Gewinde 6, mit dem sie in die Gewindebohrung eingeschraubt wird und einen Kopf 5, der hier beispielsweise einen Imbusschraubenkopf darstellt. Die Schraube 4 entspricht einer solchen Schraube, mit der ein Abutment beispielsweise an ein Implantat festgeschraubt werden kann.

Die Darstellung in Figur 1 für das stabförmige Element 3 und die Schraube 4 sind lediglich beispielhaft. Je nach gewünschter Innenform des Zahnersatzteils, so wie beispielsweise eines Abutments, kann hier jede beliebige Form vorhanden sein.

Der erste Bereich wird hier in diesem Beispiel durch die Oberfläche 12 der Scheibe 7, das stabförmige Element 3 und die Schraube 4 gegeben.

Die Vorrichtung 1 umfasst einen Halteteil 10, der hier stabförmig ausgebildet ist. Dieser ist mit einer Abflachung 11 an einer Seite versehen. Durch diese Abflachung lässt sich die Vorrichtung in einer eindeutigen Lage halten.

Diese eindeutige Lagerung kann jedoch unter Umständen nicht präzise genug sein, um hieraus auf die innenform des Modells des Zahnersatzteils schließen zu können. Von daher bietet sich hier eine zusätzliche Erfassung der Lage durch den zweiten Bereich (mit z. B. der Formmarkierung 8) an.

In speziellen Beispielen einer Vorrichtung zum Halten eines Modells eines Zahnersatzteils kann jedoch bereits eine eindeutige Lageidentifizierung nur durch den Halteteil 10 gegeben sein.

Durch jedoch zumindest eine im groben eindeutige Lagerung befindet sich z. B. eine Formmarkierung 8 an einer im groben vorbestimmten Stelle. Nur an dieser im groben vorbestimmten Stelle muss dann mit einem Scanverfahren und der entsprechenden Datenauswertung nach der Formmarkierung gesucht werden, so dass diese dann nicht nur grob, sondern präzise in ihrer Lage bestimmt werden kann.

Je mehr Formmarkierungen vorgesehen sind, desto präziser kann die Lage der Vorrichtung zum Halten erfasst werden.

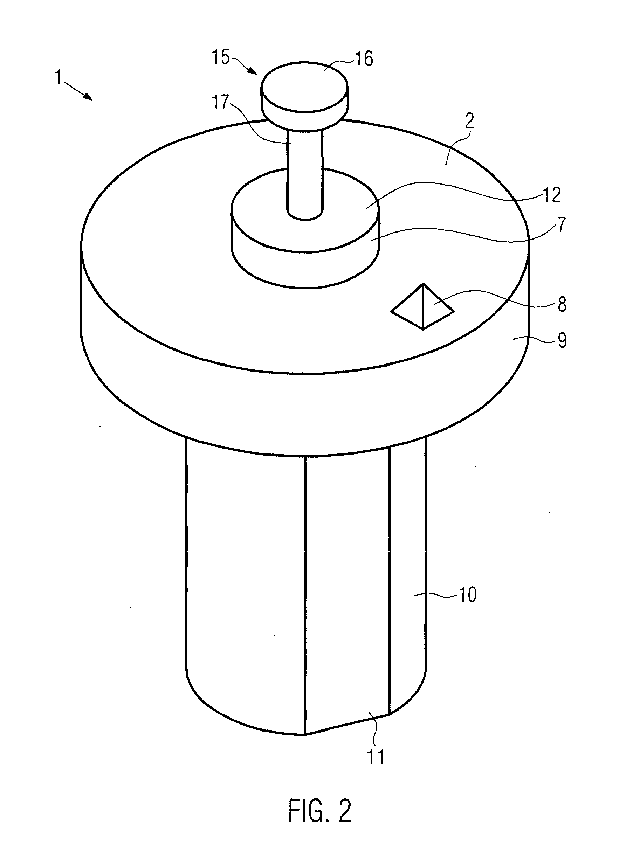

In Figur 2 ist eine Variante der Vorrichtung zum Halten des Modells eines Zahnersatzteils dargestellt. Sie unterscheidet sich von der Vorrichtung aus Figur 1 lediglich in dem Teil, der die Innenform eines Zahnersatzteils vorgibt. Hier ist zur Vorgabe der Innenform ein Element 15 mit einem Stab 17 und einem Kopf 16 ausgebildet. Dieser kann entweder in die Scheibe 7 eingesteckt worden sein oder einstückig mit dieser ausgebildet worden sein oder sonst wie mit der Scheibe befestigt worden sein (z. B. eingeschraubt). Auch die Variante in Figur 2 ist lediglich beispielhaft.

Es sei hier angemerkt, dass an sich durch die Vorrichtung zum Halten die Innenform des Zahnersatzteils nicht vorgegeben werden muss, da dies später bei der Erstellung eines Modells von digitalen Daten digital eingefügt werden kann. Um jedoch dem Modellierer eine bessere Übersicht über die spätere Struktur des Zahnersatzteils zu geben, ist es vorteilhaft, wenn der Halter bereits die Innenform des Zahnersatzteils aufweist. Beispielsweise für die Abschätzung von Wandstärken in dem Modell ist dies vorteilhaft.

Andererseits reicht es auch, wenn die Vorrichtung zum Halten die Innenform nur in etwa vorgibt. So können Abweichungen in einigen Bemaßungen von 5 % oder 10 % vorgesehen sein, beispielsweise um einen Kanal für das Gewinde 6 der Schraube 4 breiter zu machen als das Gewinde 6 selber.

Unabhängig davon jedoch, ob die Vorrichtung die Innenform des Zahnersatzteils vorgibt oder nicht, weist die Vorrichtung einen ersten Bereich auf, in dem das Modell aufmodelliert werden kann. Fehlt beispielsweise in Figur 2 das Element 15 mit dem Stab 17 und dem Kopf 16, so ist der erste Bereich durch die Oberfläche 12 der Scheibe 7 gegeben.

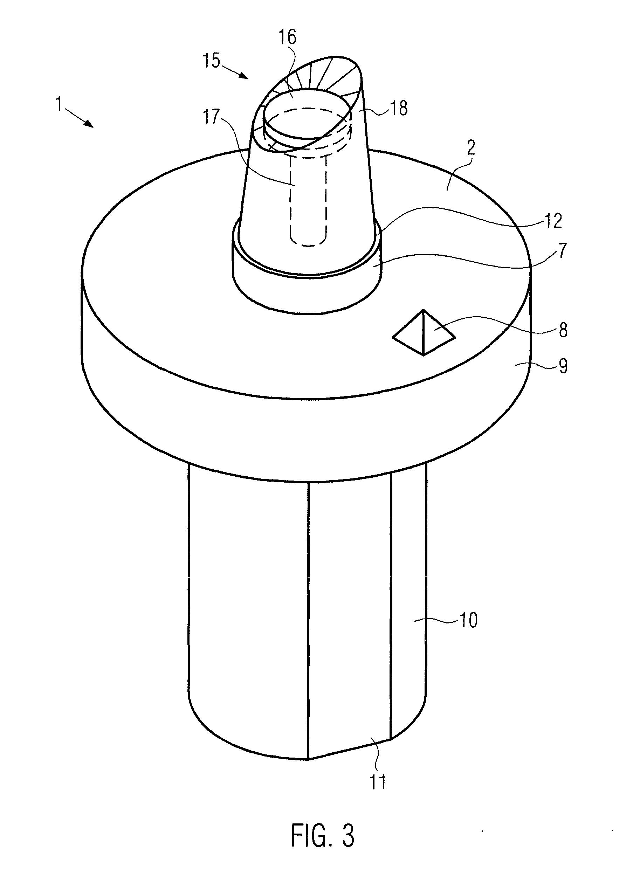

In Figur 3 ist der Halter aus Figur 2 mit einem aufmodellierten Zahnersatzteil dargestellt. Das Modell 18 des Zahnersatzteils wird beispielsweise aus Wachs auf der Oberfläche 12 um das Element 15 herummodelliert.

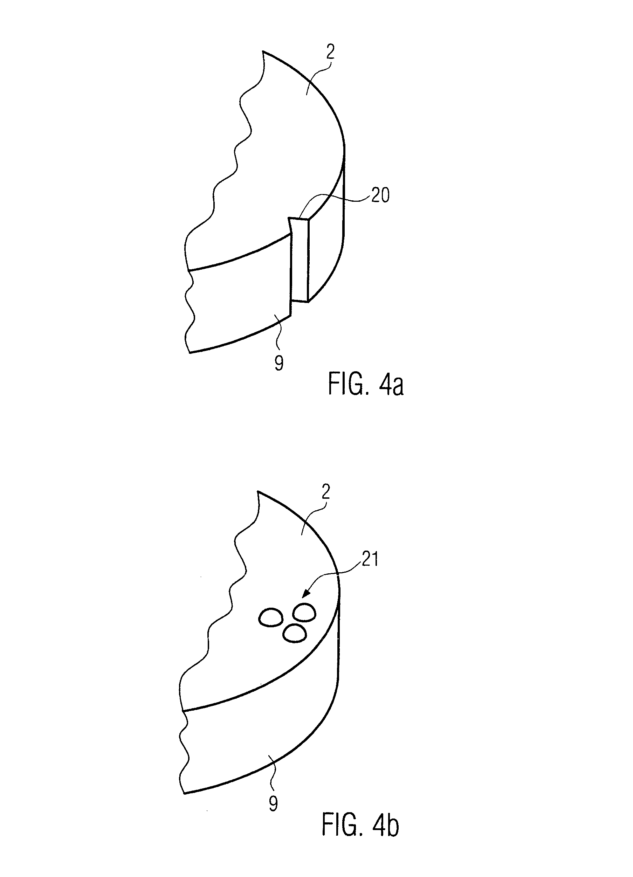

In Figur 4 a ist eine Variante der Vorrichtung zum Halten gezeigt, bei der in der Scheibe 9 an der Seite eine Kerbe 20 vorgesehen ist, mit der ebenfalls eine eindeutige Lageidentifizierung der Vorrichtung zum Halten ermöglicht wird.

In Figur 4b ist ein weiters Beispiel gezeigt, bei der drei Halbkugelelemente 21 auf der Oberfläche 2 der Scheibe 9 vorgesehen sind.

Eine Vorrichtung zum Halten mit einem Modell eines Zahnersatzteils 18, wie es in Figur 3 dargestellt ist, kann mit einer Scanvorrichtung abgescannt werden.

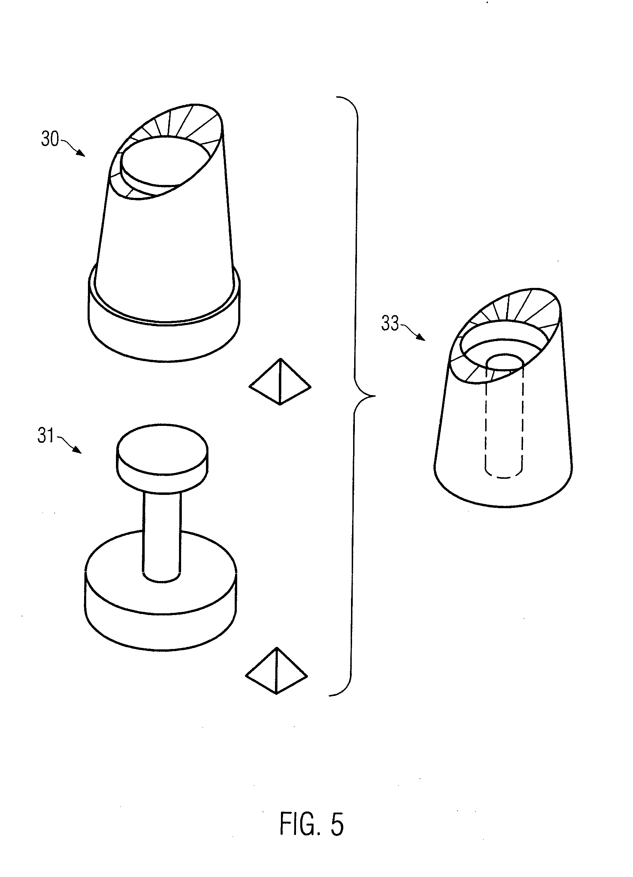

Dentalscanner für derartige Vorgänge sind bekannt. Mit einem solchen Dentalscanner können die Außenform des Modells 18, die freiliegende Oberfläche des Kopfes 16 und der Oberfläche 12 abgescannt werden. Damit kann die Außenform des Zahnersatzteils bestimmt werden. Weiterhin können mit dem Scanner beispielsweise die Oberfläche 2 und die Formmarkierung 8 erfasst werden. Auch die Kanten, die durch die Scheibe 7 gegeben werden bzw. die Scheibe 7 selbst können abgescannt werden. Ein entsprechend gewonnener Datensatz ist beispielhaft in Figur 5 mit der Bezugsziffer 30 dargestellt.

Bei einem Verfahren zum Erstellen eines digitalen Modells eines Zahnersatzteils gemäß der Erfindung ist weiterhin ein Datensatz vorhanden, der die gewünschte Innenform eines Zahnersatzteils wiedergibt. Ein entsprechender Datensatz ist in Figur 5 unter Bezugsziffer 31 dargestellt. Die Relation dieses Datensatzes zu einer Formmarkierung ist bekannt und ebenfalls gespeichert (siehe Figur 5).

Der in Figur 5 dargestellte Datensatz 31 gibt die tatsächlich gewünschte Innenform des Zahnersatzteils wieder, wohingegen die Formstücke in den Figuren 1, 2 und 3 lediglich eine Orientierungshilfe für das Erstellen des Modells sind. So kann der Datensatz 31, der im Wesentlichen der Form der Vorrichtung zum Halten aus Figur 2 entspricht, in seinem Durchmesser etwas größer sein, um so beispielsweise etwas Spiel für das Einsetzen einer Schraube oder Ähnliches zu ermöglichen.

Hier ist also festzuhalten, dass der Datensatz 31, der zur Erstellung des digitalen Modells verwendet wird, nicht zwangsläufig der Form, die in der Vorrichtung 1 zum Halten vorgegeben ist, exakt entsprechen muss, auch wenn dies natürlich möglich ist.

Die Daten 30 und 31 in Figur 5 können mit einem entsprechenden (Software-) Verfahren zusammengesetzt werden, um anschließend ein digitales Modell 33 eines Zahnersatzteils zu gewinnen. Hierzu können verschiedenste Verfahren eingesetzt werden. Beispielsweise kann die relative Anordnung des Datensatzes 30 und 31 anhand der eindeutigen Lageidentifizierung des Halters bestimmt werden und anschließend durch "Subtraktion" der beiden Datensätze das Modell 33 gewonnen werden. Das Modell 33 weist ein Abutment auf, in dem eine zentrale Öffnung für ein Schraubengewinde sowie Raum für den Kopf einer Schraube vorgegeben ist. Ein solches digitales Modell 33 kann einem bekannten CAM-Verfahren, wie etwa einem Fräsverfahren, 3D-Lithographie oder Ähnlichem zugeführt werden, um ein Zahnersatzteil herzustellen.

Die Erfindung betrifft weiterhin einen computerlesbaren Datenträger, mit Instruktionen zum Durchführen eines der hier beschriebenen Verfahren, sobald die entsprechenden Instruktionen auf einen Computer geladen werden.

### Nummerierte Ausführungsformen:

Ausführungsform 1: Vorrichtung (1) zum Halten eines Modells (18) eines Zahnersatzteils, wie etwa eines Abutments, mit: einem ersten Bereich (12, 3, 4, 5, 6, 15, 16, 17), in dem das Modell des Zahnersatzteils aufmodelliert werden kann, und einem zweiten Bereich (2, 7, 8), der eine eindeutige Lageidentifizierung des Halters erlaubt.

Ausführungsform 2: Vorrichtung nach Ausführungsform 1, **dadurch gekennzeichnet, dass** der erste Bereich der Innenform des Zahnersatzteils entspricht oder dass der erste Bereich zur Aufnahme eines Modellstücks ausgebildet ist, in oder auf den ein Modellstück (3, 15) mit der Innenform des Zahnersatzteils ein- oder aufgesetzt werden kann.

Ausführungsform 3: Vorrichtung nach Ausführungsform 1 oder 2, **dadurch gekennzeichnet, dass** der zweite Bereich zumindest eine, zwei, drei oder mehr ebene Flächen (2, 8) umfasst.

Ausführungsform 4: Vorrichtung nach einer der Ausführungsformen 1 bis 3, **dadurch gekennzeichnet, dass** der zweite Bereich eine, zwei, drei oder mehr Formmarkierungen (8, 20, 21) aufweist, wie etwa eine Nut, ein Rille, einen Wulst, einen Vorsprung, eine Vertiefung, eine Erhöhung, eine Kugel, eine Halbkugel, eine positive oder negative Kegel- oder Pyramidenform oder dergleichen.

Ausführungsform 5: Vorrichtung nach einer der Ausführungsformen 1 bis 4, **dadurch gekennzeichnet, dass** der zweite Bereich einen Verbindungsteil (7) umfasst, der mit dem ersten Bereich verbunden ist.

Ausführungsform 6: Vorrichtung nach Ausführungsform 5, **dadurch gekennzeichnet, dass** der Verbindungsteil (7) stab- oder scheibenförmig ist und bevorzugterweise von einer ebenen Fläche (2) absteht.

Ausführungsform 7: Vorrichtung nach einer der Ausführungsformen 1 bis 6, **dadurch gekennzeichnet, dass** die Vorrichtung weiterhin einen Halteteil (10) umfasst, mit der die Vorrichtung zum Halten in einem Halter gehalten werden kann.

Ausführungsform 8: Vorrichtung nach Ausführungsform 7, **dadurch gekennzeichnet, dass** der Halteteil (10) stabförmig ist.

Ausführungsform 9: Vorrichtung nach Ausführungsform 7 oder 8, **dadurch gekennzeichnet, dass** der Halteteil (10) so ausgebildet ist, dass eine Halterung der Vorrichtung in einer eindeutigen Lage möglich ist.

Ausführungsform 10: Vorrichtung zum Scannen von Objekten, wie etwa Kiefermodellen und/oder Zahnmodellen und/oder Sägezahnmodellabschnitten, mit einem Halter, in den eine Vorrichtung nach einer der Ausführungsformen 1 bis 9 mit einer eindeutigen Lageorientierung gehalten und abgescannt werden kann.

## Patentansprüche

1. Verfahren zum Erstellen eines digitalen Modells (33) eines Zahnersatzteils, wie etwa eines Abutments, mit den Schritten:
Abscannen eines Zahnersatzteilmodells (18) zusammen mit einer Vorrichtung zum Halten (1) des Zahnersatzteilmodells,
Auswerten der Scandaten (30) zur Erfassung zumindest eines Teils der Form des Zahnersatzteilmodells (18) und
Auswertung der Scandaten (30) zur Erfassung zumindest der Lage einer Vorrichtung zum Halten (1) des Zahnersatzteilmodells
wobei die Vorrichtung zum Halten zwei Bereiche hat und der erste Bereich einer gewünschten Innenform des Zahnersatzteils entspricht,
wobei ein Datensatz (31) vorhanden ist, der die gewünschte Innenform des Zahnersatzteils wiedergibt und dessen Relation zu einer Formmarkierung (8, 20, 21), die der zweite Bereich der Vorrichtung zum Halten aufweist, bekannt ist und ebenfalls gespeichert ist,
**dadurch gekennzeichnet, dass** die erkannte Lage der Vorrichtung (1) zum Halten zur Festlegung der Innenform des Zahnersatzteils ausgewertet wird.

2. Verfahren nach Anspruch 1, **gekennzeichnet durch** den Schritt des Modellierens des Zahnersatzteilmodells (18) auf der Vorrichtung zum Halten (1).

3. Verfahren nach Anspruch 1 oder 2, **dadurch gekennzeichnet, dass** der Schritt des Modellierens des Zahnersatzteils und/oder das Abscannen an anderen Orten als das Auswerten der Scandaten erfolgt oder dass der Schritt des Modellierens des Zahnersatzteils, das Abscannen und das Auswerten der Scandaten an einem Ort durchgeführt werden.

4. Verfahren zum Herstellen eines Zahnersatzteils, mit den Schritten:
Erstellen eines digitalen Modells nach einem der Ansprüche 1 bis 3;
Herstellen des Zahnersatzteils mit dem digitalen Modell, mit einem CAM-Verfahren wie etwa Fräsen, 3D- Lithographie oder Ähnlichem.

5. Computerlesbares Medium mit Instruktionen für einen Computer zur Ausführung des Verfahrens nach Anspruch 1.

## Claims

1. Method for generating a digital model (33) of a dental prosthesis part, such as an abutment, comprising the steps:
scanning a dental prosthesis part model (18) together with a device for holding (1) of the dental prosthesis part model,
evaluating the scan data (30) for detecting at least one portion of the shape of a dental prosthesis part model (18), and
evaluating the scan data (30) for detecting at least the position of a device for holding (1) the dental prosthesis part model,
wherein the device for holding has two portions and the first portion corresponds to a desired inner shape of the dental prosthesis part,
wherein a data set (31) is provided representing the desired inner shape of the dental prosthesis part and whose relation to a shape marking (8, 20, 21) being provided at the second portion of the device for holding is known and is also stored,
**characterized in that** the detected position of the device (1) for holding is evaluated for defining the inner shape of the dental prosthesis part.

2. Method according to claim 1, **characterized by** the step of modeling the dental prosthesis part model (18) on the device for holding (1).

3. Method according to claim 1 or 2, **characterized in that** the step of the modeling of the dental prosthesis part and/or the scanning is performed at other locations than the evaluation of the scan data or that the step of the modeling of the dental prosthesis part, the scanning and the evaluation of the scan data is performed at one location.

4. Method for manufacturing a dental prosthesis part, comprising the steps:
generating a digital model according to one of claims 1 to 3;
manufacturing the dental prosthesis part with the digital model, with a CAM method such as milling, 3D-lithography or the like.

5. Computer-readable medium with instructions for a computer to carry out the method according to claim 1.

## Revendications

1. Procédé d'élaboration d'un modèle numérique (33) d'une pièce de restauration dentaire, comme un pilier dentaire, comprenant les étapes suivantes :
scannage d'un modèle de pièce de restauration dentaire (18) en commun avec un dispositif de maintien (1) du modèle de pièce de restauration dentaire,
exploitation des données scannées (30) pour relever au moins une partie de la forme du modèle de pièce de restauration dentaire (18), et
exploitation des données scannées (30) pour relever au moins la position d'un dispositif de maintien (1) du modèle de pièce de restauration dentaire,
procédé
d'après lequel le dispositif de maintien possède deux zones et la première zone correspond à une forme intérieure souhaitée de la pièce de restauration dentaire, et
d'après lequel il existe un jeu de données (31), qui reproduit la forme intérieure souhaitée de la pièce de restauration dentaire, et sa relation à une marque de forme (8, 20, 21), que présente la deuxième zone du dispositif de maintien, est connue et également mémorisée,
**caractérisé en ce que** l'on exploite la position relevée du dispositif (1) de maintien, pour fixer la forme intérieure de la pièce de restauration dentaire.

2. Procédé selon la revendication 1, **caractérisé par** l'étape du modelage du modèle de pièce de restauration dentaire (18) sur le dispositif de maintien (1).

3. Procédé selon la revendication 1 ou la revendication 2, **caractérisé en ce que** l'étape du modelage de la pièce de restauration dentaire et/ou le scannage s'effectue en d'autres endroits que celui où s'effectuent l'exploitation des données scannées, ou bien l'étape du modelage de la pièce de restauration dentaire, le scannage et l'exploitation des données scannées sont effectués en un seul endroit.

4. Procédé de fabrication d'une pièce de restauration dentaire comprenant les étapes suivantes :
élaboration d'un modèle numérique selon l'une des revendications 1 à 3 ;
fabrication de la pièce de restauration dentaire à l'aide du modèle numérique, au moyen d'un processus de FAO, tel qu'un fraisage, une lithographie 3D ou un processus similaire.

5. Support lisible par ordinateur, comprenant des instructions destinées à un ordinateur pour l'exécution du procédé selon la revendication 1.
